# EUROPÄISCHE PATENTANMELDUNG

(11) **EP 0 786 918 A1**
(43) Veröffentlichungstag der Anmeldung: **30.07.1997**
(21) Anmeldenummer: 96101077.4
(22) Anmeldetag: 25.01.1996
(51) Int. Cl.: H04Q 11/04

(54) **Schnittstelleneinrichtung eines ATM-Vermittlungssystems**

(71) Anmelder: SIEMENS AKTIENGESELLSCHAFT, 80333 München (DE)
(72) Erfinder: Preiss, Frank, Dipl.-Phys., D-82288 Kottgeisering (DE); Heink, Matthias, Dipl.-Phys., D-81371 München (DE); Schreiber, Wilhelm, Dipl.-Ing., D-83646 Bad Tölz (DE)

(57) **Zusammenfassung**

Zur Unterstützung von Multicast-Verbindungen muß für ATM-Zellen am Ausgang eines ATM-Vermittlungssystems ggf. ein räumliches und zeitliches Multicasting durchgeführt werden.
Die Erfindung beschreibt eine Schnittstelleneinrichtung, die das genannte Multicasting in optimaler Weise unterstützt.

## Beschreibung

Jede ATM-Zelle einer Multicast-Verbindung, die in Richtung Ausgang eines ATM-Koppelnetzes, d.h. in Richtung Teilnehmer (Downstream) befördert wird, muß von einer entsprechenden Schnittstellen-Einrichtung zunächst in maximal bis zu n identische Zellen kopiert werden (die Zahl n entspricht der Anzahl der von der betrachteten Schnittstelleneinrichtung bedienten Ports). Ist dieser als räumliches Multicasting zu bezeichnende Vorgang abgeschlossen, so muß der interne ATM-Header der zuvor kopierten Zellen pro Port maximal bis zu m mal umgewertet werden (die Zahl m entspricht der maximal möglichen Anzahl von User-Verbindungen (VPC/VCC) pro Port). Durch diese Umwertung, die als logisches Multicasting bezeichnet wird, werden die intern kopierten Zellen mit der jeweils eindeutigen Adresse einer User-Verbindung (externer ATM-Header) versehen.

Die genannte räumliche und logische Multicasting-Funktion ist unabhängig von dem im PHY-Layer (Physical Layer) bedienten physikalischen Teil einer Port-Schnittstelle und somit ein ATM-Layer-spezifischer Teil einer Port-Schnittstelle.

Durch die Multicasting-Funktionalität wird kurzfristig die ursprüngliche Bitrate der Schnittstelleneinrichtung um ein vielfaches überschritten. Da diese erzeugten ATM-Zellen erst nach und nach ausgesendet werden können, müssen die übrigen ATM-Zellen zurückgestaut, wobei der Rückstaumechanismus nicht zu Datenverlusten im Zellenstrom führen darf.

Eine mögliche Lösung dieses Problems wäre es, jedem aktiven Port einen eigenen Pufferspeicher zuzuordnen, der die ankommenden Zellen zwischenspeichert. Bei dieser Lösung müßte allerdings jeder einzelne Pufferspeicher die maximale Burstrate (worst case) verkraften, damit eine bestimmte vorgegebene Zellenverlustwahrscheinlichkeit nicht überschritten wird. Die Folge davon wäre, daß die Auslastung dieser Pufferspeicher nur sehr gering sein würde bzw. die jeweils vorzusehende Puffergröße relativ groß sein würde.

Des weiteren würde die Multicast-Funktionalität bei dieser Lösung bereits bei niedrigen Bitraten ein Design mit sehr hoher Arbeitsfrequenz erfordern, da eine ankommende Zelle bis zu maximal n-mal kopiert werden müßte.

Schließlich würde für die Realisierung viel Speicherfläche und damit Chipfläche benötigt, was entsprechende Kosten bedeuten würde. Für jeden Pufferspeicher müßte nämlich Speicherfläche zur Verfügung gestellt werden, d.h. je mehr Ports, um so mehr Speicherfläche.

Der Erfindung liegt die Aufgabe zugrunde, eine Schnittstelleneinrichtung anzugeben, die eine Multicast-Funktion umfaßt und gleichzeitig die genannten Nachteile vermeidet.

Diese Aufgabe wird durch eine Schnittstelleneinrichtung gemäß Anspruch 1 gelöst.

Durch die Verwendung des gemeinsamen Pufferspeichers wird der notwendige Speicheraufwand zur Unterstützung des Multicastings auf ein Minimum reduziert. Durch den Einsatz von Adresszeigern werden nämlich bei dem erfindungsgemäßen Multicasting keine Zellen, sondern nur deren Zeiger auf den Speicherplatz (Queue-RAM) kopiert. Dadurch ist die Performanceanforderung an die Schaltung wesentlich entspannter, d.h. es sind niedrigere Arbeitsfrequenzen ausreichend. Außerdem wird bei gleicher Funktionalität nur eine geringere Chipfläche benötigt, wodurch weniger Kosten entstehen.

Im folgenden wird ein Ausführungsbeispiel der Erfindung anhand der Zeichnung näher erläutert.

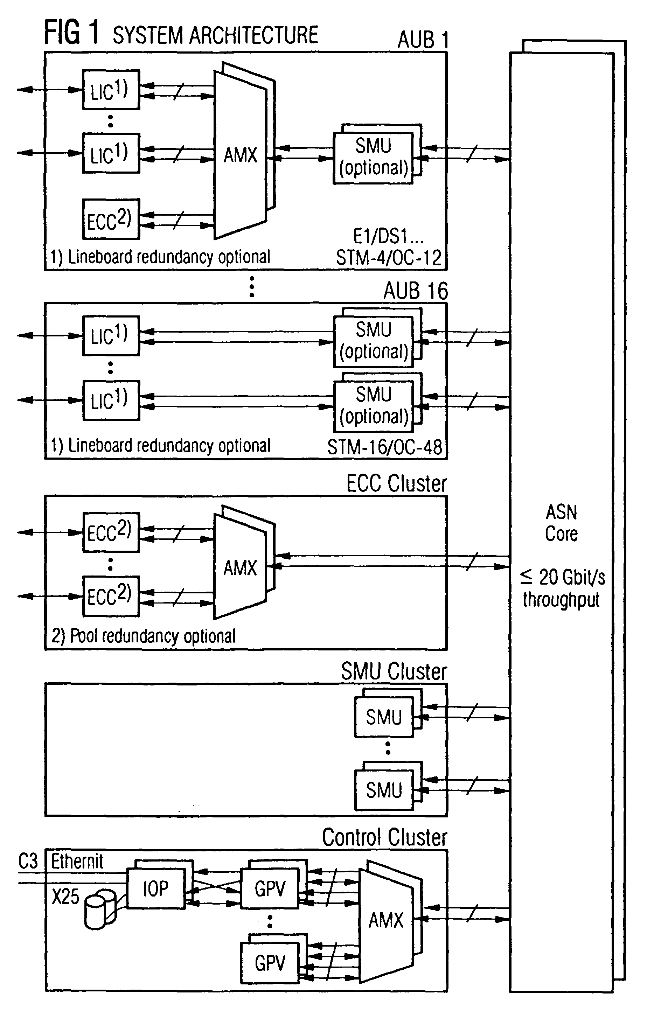

FIG 1 zeigt die Hardwarestruktur eines beispielhaften ATM-Vermittlungssystems.

Das Vermittlungssystem umfaßt ein zentrales Koppelnetz ASN, das für den Transport der ATM-Zellen zwischen den an das Koppelnetz angeschlossenen peripheren Einheiten (z.B. Breitband-Access Units AUB), verantwortlich ist.

Das Vermittlungssystem umfaßt desweiteren Breitband-Access Units AUB, die an das zentrale Koppelnetz ASN angeschlossen sind. Die Breitband-Access Units umfassen verschiedene Typen von Line Interface Karten LIC (Leitungsschnittstelleneinrichutngen) zum Anschluß von unterschiedlichen Leitungstypen an das Vermittlungssystem sowie ATM-Multiplexer AMX zum Multiplexen und/oder Konzentrieren des Verkehrs in Richtung Koppelnetz.

Schließlich können Breitband-Access Units auch statistische Multiplexer SMU enthalten sowie Echounterdrückungseinheiten ECC, die zur Unterdrückung von Echos dienen.

In den LICs wird der über die externen Leitungen am Vermittlungssystem ankommende Datenstrom in einen Strom von ATM-Zellen umgewandelt, und jede ATM-Zelle wird dupliziert an das ASN weitergeleitet. Das ASN umfaßt zwei identische Ebenen ASN0 und ASN1, über die die duplizierten Zellen parallel durchgeschaltet werden. Die Wege (paths), über die die Zellen dabei durchgeschaltet werden, sind identisch, da alle kopierten Zellen die gleichen selbstroutenden Header haben.

Das Vermittlungssystem umfaßt des weiteren eine Gruppe von zentralen Steuerprozessoren GP, die über einen Multiplexer AMX ebenfalls an das zentrale Koppelnetz angeschlossen sind. Die zentralen Prozessoren unterstützen auf zentraler Ebenen die Signalisierung, das Call Processing, das Datenmanagement, die Koordination der Ressourcen und die Aktivitäten für Operation and Maintenance.

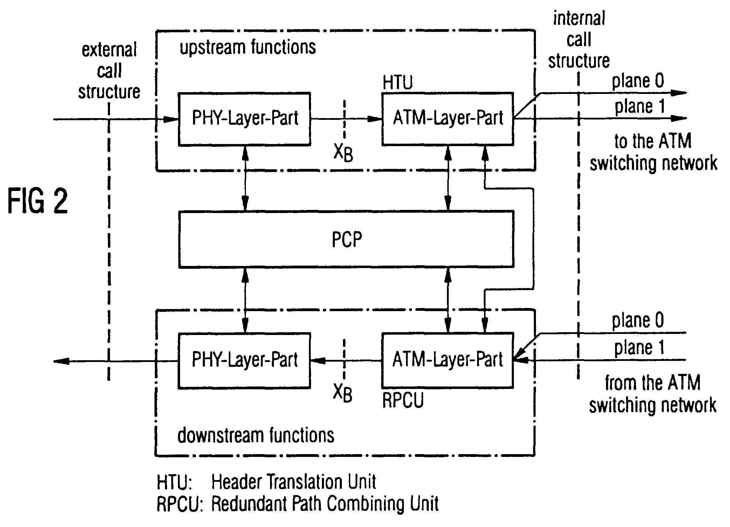

FIG 2 zeigt die Struktur einer Leitungsschnittstelleneinrichtung LIC.

Die Leitungsschnittstelleneinrichtung LIC dient zum Verbinden der externen Leitungsschnittstellen mit dem Koppelnetz ASN. Sie umfaßt im wesentlichen einen ersten Schnittstellenteil (PHY-Layer-Part), der die Schnittstellen (Port-Schnittstellen) zu den an das Vermittlungssystem angeschlossenen externen Leitungen bezüglich der physikalischen Schicht realisiert, einen zweiten Schnittstellenteil (ATM-Layer-Part), der die genannten Port-Schnittstellen bezüglich der ATM-Schicht realisiert und eine periphere Control-Plattform PCP zur Steuerung der LIC.

Der ATM-Schnittstellenteil umfaßt eine Header Translation Unit HTU und eine Redundant Path Combining Unit RPCU.

Die HTU dient der Bearbeitung der Zellen in stromaufwärtiger Richtung (Upstream), d.h. derjenigen Zellen, die vom Vermittlungssystem empfangen werden.

Die RPCU dient der Bearbeitung der Zellen in stromabwertiger Richtung (Downstream), d.h. derjenigen Zellen, die vom Vermittlungssystem ausgesendet werden.

Die periphere Control-Plattform PCP steuert den LIC und unterstützt auf dezentraler Ebene die Signalisierung, das Call Processing, das Datenmanagement, die Koordination der Ressourcen und die Aktivitäten für Operation and Maintenance.

Die Bearbeitung einer Zelle durch die HTU und RCPU umfaßt insbesondere eine Header-Konversion mithilfe eines Zellen - Bearbeitungsspeichers (Cell Processing RAM). Dieser Speicher enthält alle verbindungsindividuellen Daten. Jeder Eintrag in diesen Speicher wird während der Call-Setup-Phase durch die PCP geschrieben.

Der genannte Eintrag enthält folgende Untereinträge:
- ein Flag, das anzeigt, ob es für eine Upstream-Zelle eine bereits eingerichtete Verbindung gibt oder nicht,
- einen neuen Header für die Zelle (im Falle einer Downstream-Zelle insbesondere die neuen VCI-/ und VPI-Werte),
- Information für denjenigen Headerteil der Zelle, der für interne Zwecke benötigt wird (bei dieser Information handelt es sich im wesentlichen um Routinginformation),
- Zellen-Zähler für die Billing-Funktion und das Policing.

Nach erfolgter Header-Konversion wird der neue Wert für das HEC-Feld erzeugt und eine Zellenkonversion durchgeführt, indem die externe Zellenstruktur in eine systeminterne Zellenstruktur (bzw. umgekehrt) umgewandelt wird.

FIG 3 zeigt die Struktur der RPCU.

FIG 4 zeigt den Ablauf der Bearbeitung einer Zelle durch die RPCU und verdeutlicht dabei nebenbei den Zweck der verschiedenen Typen von Connection Identifizierern für die Bearbeitung einer Zelle.

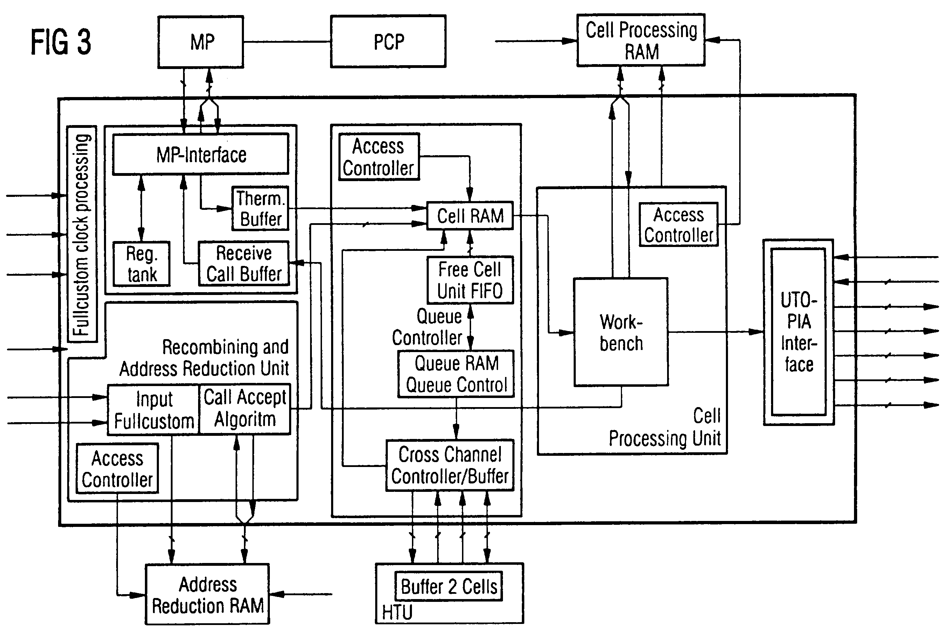

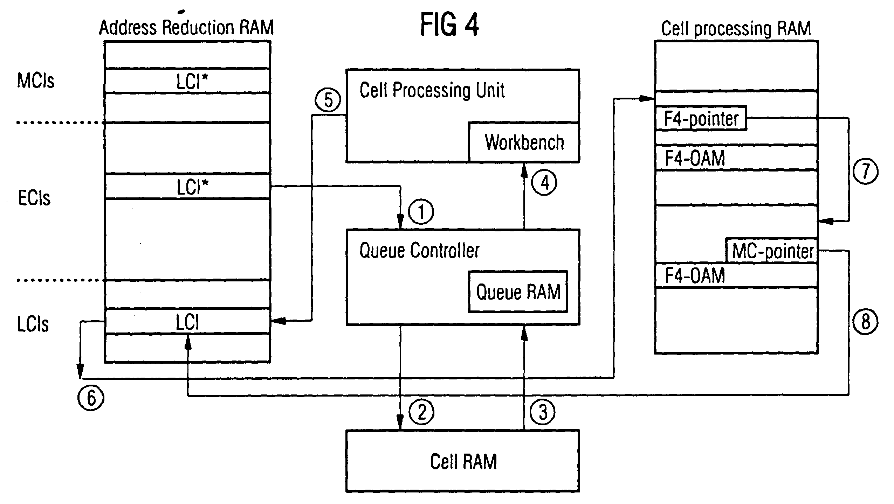

Im folgenden werden die einzelnen Komponenten der RPCU und ihre Funktionen anhand der FIG 3 und 4 näher erläutert.

Bevor die vom Koppelnetz ankommenden duplizierten Zellen zum Zellen-RAM weitergeleitet werden, durchlaufen sie eine Rekombinierungs- und Adressenreduzierungs-Einheit.

Die Rekombinierungs-Einrichtung stellt sicher, daß nur die erste korrekte Kopie einer Zelle (gültige Zelle) weiterbearbeitet wird.

Nachdem eine Zelle die Rekombinierungs-Einrichtung passiert hat, wird für diese Zelle eine Adressenreduzierung durchgeführt. Hierzu werden dem Adressreduzierungs-RAM die Einträge "Local Connection Identifier LCI*" und "Multi-Port Number MPN" entnommen, wobei diese Einträge über den Connection Identifizierer (ECI/MCI) des Zellen-Headers adressiert werden (es wird zwischen dem Connection-Identifier ECI einer Punkt-zu-Punkt-Verbindung (pt-pt-Verbindung) oder einer Mehrpunkt-zu-Punkt-Verbindung (mt-pt-Verbindung) und dem Connection-Identifier MCI einer Punkt-zu-Mehrpunkt-Verbindung (pt-mt-Verbindung) unterschieden).

Die gültige Zelle wird anschießend zusammen mit der reduzierten Adresse (LCI* und MPN) in einen Puffer der Adressenreduzierungs-Einheit geschrieben, von dem aus sie durch einen speziellen Controller, einen sogenannten Queue-Controller, in den gemeinsamen Pufferspeicher (Zellen-RAM) übertragen wird (siehe Ablaufschritt 1 und 2 in FIG 4). Der Queue Controller verteilt dabei gleichzeitig die (Zellen-RAM-)Adresse der gültigen Zelle auf eine oder mehrere Queues, die von ihm jeweils pro Port geführt werden. Der Queue Controller unterstützt durch das genannte Verteilen verschiedene Verbindungsarten, nämlich pt-pt-Verbindungen und pt-mt-Verbindungen. Im Falle einer pt-pt-Verbindung verteilt er eine Zellenadresse nur auf eine einzige Queue; Im Falle einer pt-mt-Verbindung verteilt er eine Zellenadresse auf mehrere Queues.

Der Queue Controller realisiert das Verteilen, indem er einer von der Adressenreduzierungs-Einheit übernommenen Zelle die Multi-Port-Nummer entnimmt und diese decodiert. Die Multi-Port-Nummer ist bitweise codiert. Jedes Bit steht für einen bestimmten Port. Für den Fall einer pt-pt-Verbindung ist z.B. nur ein Bit der Multi-Port-Nummer gesetzt.

Für die Verwaltung der freien Plätze im gemeinsamen Pufferspeicher (Shared Buffer, Zellen-RAM) verwendet der Queue Controller eine Liste auf FIFO-Basis, die im folgenden als Freizellenliste bezeichnet wird. Die pro Port vorhandenen Queues werden vom Queue Controller in einem sog. Queue-RAM verwaltet.

Für das räumliche Multicasting ist es also ausreichend, lediglich die Adresse der im Zellen-RAM gespeicherten Ursprungszelle in die jeweilige(n) Queue(s) im Queue-RAM zu schreiben. Dies ermöglicht eine einfache, sichere und schnelle Ausführung der räumlichen Multicast-Funktion.

Das logische Multicasting geschieht durch die Cell Processing Unit, und zwar durch das Abarbeiten einer verketteten Liste (Multicasting-Liste), die pro Queue und pt-mt-Verbindung im Cell Processing RAM angelegt wird.

Nachdem eine Adresse des Zellen-RAMs vom Queue Controller aus der Queue ausgelesen worden ist, wird die zu dieser Adresse gehörige Zelle vom Queue Controller aus dem Zellen-RAM gelesen und in den Arbeitsspeicher (Workbench) der Cell Processing Unit übertragen (siehe Ablaufschritt 3 und 4 in FIG 4).
Die Cell Processing Unit entnimmt dabei dem Header der Zelle die reduzierte Adresse (LCI* und MPN) und benutzt sie zur Adressierung des LCI-Bereichs im Adressenreduzierungs-RAM (siehe Ablaufschritt 5 in FIG 4). Durch diese Adressierung entnimmt sie dem Adressenreduzierungs-RAM einen Local Connection Identifier LCI, den sie zur anschließenden Adressierung des Cell Processing RAMs benutzt (siehe Ablaufschritt 6 in FIG 4).

Über die letztgenannte Adressierung entnimmt die Cell Processing Unit dem Cell Processing RAM das Identifiziererpaar VPI/VCI für den neuen externen Header. Im Falle eines logischen Multicasting stellt die letzgenannte Adressierung den Einstieg in eine Multicasting-Liste dar. Die Cell Processing Unit entnimmt der Liste dabei zunächst den Eintrag des ersten Listenelements, nämlich das Identifiziererpaar VPI/VCI und speichert gleichzeitig den Multicast-Pointer zum nächsten Listenelement in das Adressen-Reduzierungs-RAM ab, und zwar unter der Adresse, an der der Local Connection Identifier LCI abgespeichert war (siehe Ablaufschritt 8 in FIG 4). Nach dem Absenden der mit dem externen Header versehenen Zelle an das UTOPIA-Interface (Schnittstelle XB in FIG 2) holt sich die Cell Processing Unit den abgespeicherten Multicast-Pointer aus dem Adressen-Reduzierungs-RAM und versieht die Zelle zur Durchführung des logischen Multicasting mit dem nächsten Identifiziererpaar VPI/VCI für den nächsten externen Header.

Diese Operation wird so lange wiederholt, bis das Ende der Multicasting-Liste erreicht ist. Für diese Zeit bleibt auch die Adresse der im Zellen-RAM gespeicherten Zelle im Queue-RAM gespeichert.

Zur Unterstützung des räumlichen Multicasting wertet der Queue-Controller für jede ausgelesene Zellenadresse einen zu dieser Zelle gehörigen Zähleintrag aus, der in einem sogenannten Multicast-Count-RAM gespeichert ist und dazu dient, daß die Zellenadresse (und damit der entsprechende Speicherplatz im Zellen-RAM) erst dann freigegeben wird, wenn alle Ports das Multicasting zu dieser Zelle beendet haben. Der Zähleintrag ist anfänglich gleich der Anzahl der Queues, die für eine ankommende Zelle mit räumlichen Multicasts bedient werden und erniedrigt sich mit jedem Auslesen der Zellenadresse um den Wert "1".

Im Zusammenhang mit dem Queue-Controller werden von einem Mikroprozessor MP die Sollwerte für die Füllstände der einzelnen Queues eingestellt. Der Mikroprozessor dient außerdem dazu den Queue-Controller nach einem Reset zu starten, damit sich der Queue-Controller entsprechend der Konfiguration einstellt.

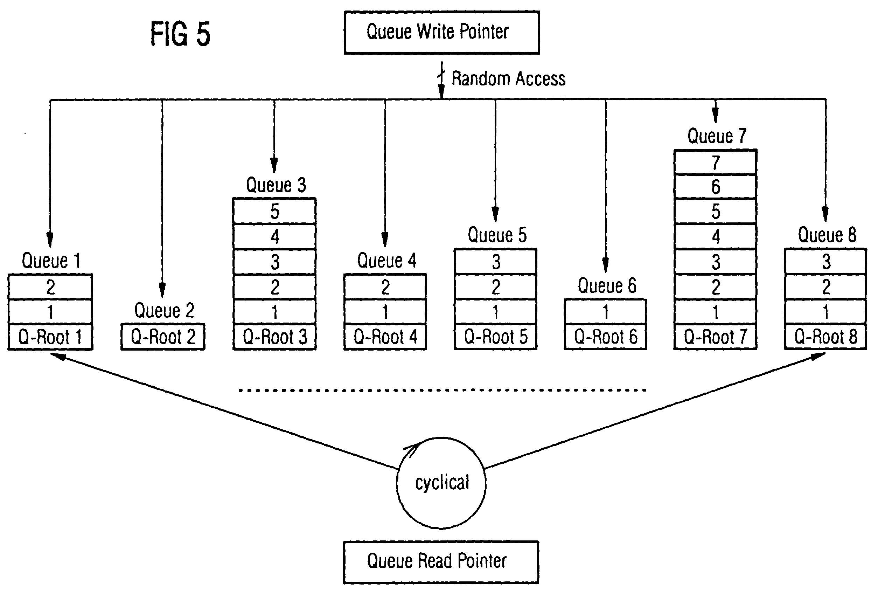

FIG 5 zeigt das Verteilen von Zellen auf die verschiedenen Queues und das anschließende zyklische Auslesen. Das Schreiben einer Zellenadresse in eine Queue hängt, wie bereits erläutert, von der Multi-Port-Nummer ab. Deshalb gibt es für das Schreiben keine Einschränkungen bei der Auswahl einer Queue. Das Auslesen der Queues durch den Queue Controller ist hingegen zyklisch. Im ersten Zellenzyklus beginnt das Lesen der Queue 0, im nächsten Zellenzyklus das Lesen der Queue 1, usw. Nachdem die letzte Queue gelesen worden ist, wird die erste Queue erneut ausgewählt usw.

Nachdem eine Adresse des Zellen-RAMs aus der Queue ausgelesen worden ist, gibt der Queue Controller die Adresse - außer im Fall eines noch nicht abgeschlossenen Multicastings - frei, indem er sie in das FIFO der freien Zellenliste zurückschreibt.

## Patentansprüche

1. ATM-Schnittstelleneinrichtung (RPCU) eines ATM-Vermittlungssystems, die die Ports des ATM-Vermittlungssystems mit einem zentralen Koppelnetz (ASN) verbindet, mit
a) einer Multicasteinrichtung, die für ATM-Zellen in Richtung der Ports ein räumliches und logisches Multicasting unterstützt,
**gekennzeichnet durch**
b) einen gemeinsamen Pufferspeicher, der ATM-Zellen für alle Ports gemeinsam zwischenspeichert, bevor sie unter der Steuerung der Multicasteinrichtung nach und nach über die Ports auf die an das Vermittlungssystem angeschlossenen externen Leitungen ausgesendet werden.
